# EUROPÄISCHE PATENTANMELDUNG

(11) **EP 4 494 887 A1**
(43) Veröffentlichungstag der Anmeldung: **22.01.2025**
(21) Anmeldenummer: 24194878.5
(22) Anmeldetag: 18.05.2018
(51) Int. Cl.: B41M 5/337, B41M 5/42, B41M 5/52, B41M 5/44

(54) **BESCHICHTUNGSZUSAMMENSETZUNG ZUR HERSTELLUNG EINES SCHICHTVERBUNDES**

(30) Priorität: 19.05.2017 DE 102017111022; 23.11.2017 DE 102017127680
(62) Teilanmeldung aus: 18726130.0
(71) Anmelder: Mitsubishi HiTec Paper Europe GmbH, 33699 Bielefeld (DE)
(72) Erfinder: Wilke, Nora, 24943 Flensburg (DE); Schreer, Martin, 49326 Melle (DE)
(74) Vertreter: Eisenführ Speiser

(57) **Zusammenfassung**

Die vorliegende Erfindung betrifft eine Beschichtungszusammensetzung zur Herstellung eines Schichtverbundes, umfassend a) einen modifizierten oder unmodifizierten Polyvinylalkohol, b) ein Alkylen/(Meth)Acrylsäure-Copolymer c) einen Vernetzer und d) ein, zwei oder mehr als zwei Pigmente. Die vorliegende Erfindung betrifft zudem einen Schichtverbund, die Verwendung eines Schichtverbundes als Lebensmittelverpackung, Eintrittskarte, Ticket, Glücksspielbeleg, Parkticket oder dergleichen, die Verwendung einer Mischung aus Alkylen/(Meth)Acrylsäure-Copolymer und modifiziertem oder unmodifiziertem Polyvinylalkohol in einer Schicht eines Schichtverbundes, eine Verwendung einer Beschichtungszusammensetzung zur Herstellung eines Schichtverbundes und ein Verfahren zur Herstellung eines Schichtverbundes.

## Beschreibung

Die vorliegende Erfindung betrifft eine Beschichtungszusammensetzung zur Herstellung eines Schichtverbundes, einen Schichtverbund, die Verwendung eines Schichtverbundes als Verpackungsmaterial, insbesondere zur Verpackung von Lebensmitteln, Eintrittskarte, Ticket, Glücksspielbeleg, Parkticket oder dergleichen, die Verwendung einer Mischung aus Alkylen/(Meth)Acrylsäure-Copolymer und modifiziertem oder unmodifiziertem Polyvinylalkohol in einer Schicht eines Schichtverbundes, eine Verwendung einer Beschichtungszusammensetzung zur Herstellung eines Schichtverbundes und ein Verfahren zur Herstellung eines Schichtverbundes.

Schichtverbunde, beispielsweise mit Papier, synthetischem Papier oder Kunststofffolien als Trägerschicht, werden häufig mit einer Veredelungsschicht versehen, um die Eigenschaften des Schichtverbundes zu verbessern bzw. zu verändern. Durch eine Veredelungsschicht kann beispielsweise die Bedruckbarkeit, z.B. durch Offsetdruck, oder die Beständigkeit des Aufzeichnungsmaterials gegenüber äußeren Einflüssen verbessert werden.

Insbesondere wärmeempfindliche Aufzeichnungsmaterialien, bei denen es sich um Schichtverbunde handelt, enthalten regelmäßig eine Veredelungsschicht - bei der es sich um eine Deckschicht (auch, Schutzschicht oder Topcoat genannt) handeln kann - um die Resistenz der wärmeempfindlichen Aufzeichnungsschicht gegenüber Umwelteinflüssen zu verbessern.

Wärmeempfindliche Aufzeichnungsmaterialien sind seit vielen Jahren bekannt und erfreuen sich einer hohen Beliebtheit. Diese Beliebtheit ist unter anderem darauf zurückzuführen, dass ihre Verwendung mit dem Vorteil verbunden ist, dass die farbbildenden Komponenten in dem Aufzeichnungsmaterial selbst enthalten sind und daher toner- und farbkartuschenfreie Drucker verwendet werden können. Es ist daher nicht mehr nötig, Toner- oder Farbkartuschen zu erwerben bzw. aufzufüllen. So hat sich diese innovative Technologie insbesondere beim Druck von Kassenbons, Quittungen, Versandetiketten, Parkscheinen, Eintritts- und Fahrkarten, wissenschaftlichen und medizinischen Messprotokollen, Barcodeauszeichnungen, Preisschildern (z. B. bei Selbstbedienungs-Obst- und -Gemüsewaagen) und vielen weiteren Arten von Etiketten durchgesetzt.

Häufig werden wärmeempfindliche Aufzeichnungsmaterialien eingesetzt, die vollständig unbedruckt - d.h. weiß oder nahezu weiß sind - oder lediglich rückseitig bedruckt sind. Diese unbedruckten wärmeempfindlichen Aufzeichnungsmaterialen werden beispielsweise als Bonrollen in Registrierkassen oder Fahrkartenschaltern oder in wissenschaftlichen und medizinischen Messgeräten eingesetzt, wenn abhängig von der Zahl der gekauften Waren oder Dienstleistungen oder von der Zahl der gesammelten Messdaten die Länge des bedruckten Aufzeichnungsmaterials variiert.

Neben den unbedruckten wärmeempfindlichen Aufzeichnungsmaterialien werden auch bedruckte wärmeempfindliche Aufzeichnungsmaterialien - beispielsweise als Flugtickets und Eintrittskarten - eingesetzt, die insbesondere im Offsetdruckverfahren bedruckt werden. Hierbei wird zunächst das wärmeempfindliche Aufzeichnungsmaterial mit allen unveränderlichen Informationen in hoher Stückzahl bedruckt, wie beispielsweise mit Unternehmenskennzeichen, Bildern und Text, sodass ein wärmeempfindlicher Rohling resultiert (z. B. ein Ticketrohling). Die erstellten wärmeempfindlichen Rohlinge werden am Verkaufspunkt in einen Thermodrucker eingelegt und können dann individuell mit Informationen thermisch bedruckt werden, bevor das individualisierte Aufzeichnungsmaterial an den Endkunden übergeben wird. Diese Informationen können bei jedem Druckvorgang variieren - wie beispielsweise Datum, Veranstaltungsname, Platznummer, Kartennummer, Masse, Preis usw.

Im Rahmen des vorliegenden Textes wird zwischen dem Bedrucken von wärmeempfindlichen Aufzeichnungsmaterialien (bzw. Schichtverbunden) durch den Auftrag von Druckfarben auf die Oberfläche des wärmeempfindlichen Aufzeichnungsmaterials, beispielsweise durch Offsetdruck, und dem thermischen Bedrucken von wärmeempfindlichen Aufzeichnungsmaterialien durch das Einwirken von Hitze unterschieden. Beim Einwirken von Hitze, beispielsweise mittels eines Thermodruckkopfes eines Thermodruckers, wird eine Farbbildung durch eine chemische Umsetzung des Farbstoffvorläufers induziert.

In der DE 35 44 758 C2 wird eine Papierbeschichtungsmasse beschrieben, die verwendet werden kann, um die Eigenschaften verschiedener Papiersorten, insbesondere wärmeempfindlicher Aufzeichnungspapiere zu verbessern. Insbesondere wird eine Verbesserung der Bedruckbarkeit, Weichmacherbeständigkeit, Ölbeständigkeit, Lösungsmittelbeständigkeit und Wasserbeständigkeit beschrieben.

In der DE 693 02 703 T2 wird ein Luftgepäcketikett mit einer erhöhten Reißfestigkeit und einer guten Bedruckbarkeit beschrieben.

In der US 2006/0111488 A1 wird die Herstellung einer neutralen Ethylen/Acrylsäure-Copolymer-Dispersion beschrieben und deren Verwendung für die Herstellung von Substraten für den elektrophotographischen oder digitalen Offset-Druck. Neben einem Ethylen/Acrylsäure-Copolymer und N,N-Dialkylalkanamin kann die Dispersion auch weitere Additive enthalten. Die hergestellten Substrate weisen eine verbesserte Toner-Haftung während des Druckes auf.

In der US 2012/0100340 A1 werden flache Substrate beschrieben, die zumindest auf einer Seite beschichtet sind und eine Oberflächenrauigkeit von weniger als 100 nm aufweisen. Die Beschichtung erfolgt mit einer Beschichtungszusammensetzung, die übliche Inhaltsstoffe wie Pigmente, Bindemitte, co-Bindemittel und Additive enthält. Die Substrate zeichnen sich dadurch aus, dass sie mit elektrischen Komponenten, wie beispielsweise Transistoren, Chips oder Schaltkreisen, bedruckt werden können.

In der DE 694 01 145 T2 wird ein wärmeempfindliches Aufzeichnungsmaterial beschrieben, dass mit einer Schutzschicht versehen ist.

In der WO 97/18091 A1 wird ein wärmeempfindlicher Aufzeichnungsbogen beschreiben, der eine wärmeempfindliche Aufzeichnungsschicht aufweist, welche durch eine pigmenthaltige Schutzschicht abgedeckt ist. Durch die Schutzschicht wird eine verbesserte Sperreigenschaft gegenüber Fetten, Ölen, Alkohol und Wasser erreicht.

In der DE 11 2011 100 779 T5 wird ein thermisches Aufzeichnungsmaterial beschrieben, umfassend eine wärmeempfindliche Aufzeichnungsschicht zur Farberzeugung durch Wärme, und eine Schutzschicht, die in dieser Reihenfolge auf einem Träger aufgebracht sind, wobei die Schutzschicht mindestens einen acetoacetyl-modifizierten Polyvinylalkohol enthält, der durch ein Glyoxylat und ein Epichlorhydrin-Harz vernetzt ist.

Es hat sich gezeigt, dass die im Stand der Technik beschriebenen Papier und Schutzschichten noch keine ausreichend hohe Wasserbeständigkeit und Bedruckbarkeit aufweisen.

Der vorliegenden Erfindung liegt die Aufgabe zugrunde, eine Beschichtungszusammensetzung zur Herstellung eines Schichtverbundes zur Verfügung zu stellen, mit der eine verbesserte Oberflächenbeschaffenheit, insbesondere Wasserbeständigkeit, des Schichtverbundes erreicht werden kann und mit der ein Schichtverbund hergestellt werden kann, der sehr gut bedruckbar ist, insbesondere sehr gut durch Offsetdruck bedruckbar ist.

Die vorliegende Aufgabe wurde gelöst durch eine Beschichtungszusammensetzung zur Herstellung eines Schichtverbundes umfassend
a) einen modifizierten oder unmodifizierten Polyvinylalkohol,
b) ein Alkylen/(Meth)Acrylsäure-Copolymer
c) einen Vernetzer und
d) ein, zwei oder mehr als zwei Pigmente.

Es hat sich überraschenderweise gezeigt, dass Schichtverbunde, die unter Verwendung einer erfindungsgemäßen Beschichtungszusammensetzung hergestellt wurden, eine verbesserte Wasserbeständigkeit und eine verbesserte Offsetbedruckbarkeit aufweisen. Auch nach Lagerung des hergestellten Schichtverbundes in Wasser war keine Ablösung der mit der Beschichtungszusammensetzung hergestellten Veredelungsschicht zu beobachten, sodass der Schichtverbund auch durch Offsetdruck sehr gut bedruckt werden konnte, ohne dass sich einzelne Schichten des Schichtverbundes während der mechanischen Belastung beim Drucken ablösten. Beim Einsatz der Beschichtungszusammensetzung als Deckschicht eines wärmeempfindlichen Aufzeichnungsmaterials war die Wasserbeständigkeit der Schicht so hoch, dass nach Lagerung in Wasser ein Zusammenkleben von zusammen gelagerten wärmeempfindlichen Aufzeichnungsmaterialien nicht beobachtet werden konnte.

Insbesondere die Kombination aus modifizierten oder unmodifizierten Polyvinylalkohol und Alkylen/(Meth)Acrylsäure-Copolymer in Gegenwart eines Vernetzers verbessert die Eigenschaften von Schichtverbunden, die unter Verwendung einer erfindungsgemäßen Beschichtungszusammensetzung hergestellt wurden signifikant. Die Mischung aus modifizierten oder unmodifizierten Polyvinylalkohol und Alkylen/(Meth)Acrylsäure-Copolymer zeigt einen synergistischen Effekt und die Eigenschaften des resultierenden Schichtverbundes können mit den einzelnen Substanzen alleine in dieser Form nicht erhalten werden.

Im Rahmen der vorliegenden Erfindung wird unter einem Vernetzer ein Monomer, Oligomer oder Polymer verstanden, das reaktive Gruppierungen enthält und es ermöglicht lineare oder verzweigte Makromoleküle miteinander zu dreidimensionalen Netzwerken zu verbinden. Die Vernetzer reagieren dabei je nach Typ mit den funktionellen Gruppen (-OH; - COOH usw.) der zu vernetzenden Substanz. Hierbei wird bei optimalem Verhältnis zwischen Vernetzer und funktionellen Gruppen der zu vernetzenden Substanz ein dreidimensionales Netzwerk ausgebildet. Mit der Verwendung von Vernetzern steigt die Härte der auszubildenden unter Verwendung der erfindungsgemäßen Beschichtungszusammensetzung hergestellten Schicht.

Unter dem Begriff (Meth)Acrylsäure wird im Rahmen der vorliegenden Erfindung eine Acrylsäure, eine Methacrylsäure und eine Mischung aus Acrylsäure und Methacrylsäure verstanden. Ein Alkylen/(Meth)Acrylsäure-Copolymer ist somit ein Copolymer, dass durch Reaktion eines Alkylens mit a) Acrylsäure, b) Methacrylsäure oder c) einer Mischung aus Acrylsäure und Methacrylsäure hergestellt wurde. Üblicherweise sind die Alkylen- und (Meth)Acrylsäureeinheiten im Copolymer statistisch verteilt, allerdings können auch alternierende, Block- und Pfropfcopolymere verwendet werden, wobei die statistischen Alkylen/(Meth)Acrylsäure-Copolymere erfindungsgemäß bevorzugt sind.

Erfindungsgemäß bevorzugt ist eine Beschichtungszusammensetzung, wobei es sich bei dem einen Pigment, den zwei Pigmenten oder bei den mehr als zwei Pigmenten um ein, zwei oder mehr als zwei organische Pigmente, ein, zwei oder mehr als zwei anorganische Pigmente oder um eine Mischung aus organischen Pigmenten und anorganischen Pigmenten handelt.

Erfindungsgemäß bevorzugt ist eine Beschichtungszusammensetzung, wobei zumindest ein Pigment, zwei Pigmente oder sämtliche Pigmente ausgewählt sind aus der Gruppe bestehend aus Aluminiumsilikat, Aluminiumoxid, Aluminiumhydroxid, Bariumsulfat, Bentonit, Böhmit, natürlichem Calciumcarbonat, gefälltem Calciumcarbonat, Diatomeenerde, Harnstoff-Formaldehyd-Harz, natürlichem Kaolin, kalziniertem Kaolin, Kaolinit oder calciniertem Kaolinit, Kieselgur, Kieselsäure, vorzugsweise gefällter Kieselsäure, Magnesiumsilikat, Magnesiumcarbonat, Satinweiß, Siliziumoxid, Talkum, Titanoxid, Tonerde, aktivierte Tonerde und Zinkoxid.

Erfindungsgemäß bevorzugt ist eine Beschichtungszusammensetzung, wobei die Beschichtungszusammensetzung als Pigment Kieselsäure, vorzugsweise gefällte Kieselsäure, enthält.

Erfindungsgemäß besonders bevorzugt ist eine Beschichtungszusammensetzung, wobei die Beschichtungszusammensetzung zwei oder mehr Pigmente enthält, wobei ein Pigment Kieselsäure, vorzugsweise gefällte Kieselsäure ist, und das zweite oder die weiteren Pigmente ausgewählt sind aus der der Gruppe bestehend aus Aluminiumsilikat, Aluminiumoxid, Aluminiumhydroxid, Bariumsulfat, Bentonit, Böhmit, natürliches Calciumcarbonat, gefälltes Calciumcarbonat, Diatomeenerde, Harnstoff-Formaldehyd-Harze, natürliches Kaolin, kalziniertes Kaolin, Kaolinit oder calcinierter Kaolinit, Kieselgur, Magnesiumsilikat, Magnesiumcarbonat, Satinweiß, Talkum, Titanoxid, Tonerde, aktivierte Tonerde und Zinkoxid.

Erfindungsgemäß bevorzugt ist eine Beschichtungszusammensetzung, wobei die Beschichtungszusammensetzung zwei Pigmente umfasst, bei denen es sich vorzugweise um Kaolin und Kieselsäure, vorzugsweise gefällte Kieselsäure, handelt.

Es hat sich in eigenen Untersuchungen gezeigt, dass die Verwendung von Kieselsäure als Pigment in dem mit der erfindungsgemäßen Beschichtungszusammensetzung hergestellten Schichtverbund die Offsetbedruckbarkeit noch weiter verbessert, da die Kieselsäure zur Regulierung des Wassergehaltes in dem Aufzeichnungsmaterial beiträgt. Während des Bedruckens ist es notwendig, dass das beschichtete Aufzeichnungsmaterial eine gewisse Wasseraufnahmefähigkeit aufweist. Ohne eine gewisse Wasseraufnahme kann der zu bedruckende Schichtverbund die Farbe nicht ausreichend gut annehmen. Die Kombination aus Kaolin und Kieselsäure zeigte in eigenen Untersuchungen besonders gute Eigenschaften.

Die Verwendung einer Mischung von Pigmenten, wobei ein Pigment eine Kieselsäure, vorzugsweise eine gefällte Kieselsäure, ist, hat sich als besonders vorteilhaft erwiesen. Die Kieselsäure regelt die Wasseraufnahme des aus der Beschichtungszusammensetzung hergestellten Schichtverbund, während das weitere Pigment bzw. die weiteren Pigmente die technischen Eigenschaften - wie Festigkeit, Kratzbeständigkeit, optische Eigenschaften - des Schichtverbundes verbessern.

Erfindungsgemäß bevorzugt ist eine Beschichtungszusammensetzung, wobei der Massenanteil an Kieselsäure in der Beschichtungszusammensetzung 0,02 bis 0,10 beträgt, vorzugsweise 0,05 bis 0,07 beträgt, ganz besonders bevorzugt 0,01 bis 0,05 beträgt, bezogen auf die Trockenmasse der Beschichtungszusammensetzung.

Eigene Untersuchungen haben gezeigt, dass das Wasseraufnahmevermögen des aus der Beschichtungszusammensetzung hergestellten Schichtverbundes optimal für die Offsetbedruckbarkeit ist, wenn der Gehalt an Kieselsäure in den oben angegebenen Bereichen ist.

Erfindungsgemäß bevorzugt ist eine Beschichtungszusammensetzung, wobei die Kieselsäure eine mittlere Teilchengröße (d50) im Bereich von 5 bis 18 µm aufweist, vorzugsweise eine Teilchengröße im Bereich von 8 bis 15 µm aufweist, ganz besonders bevorzugt im Bereich von 10 bis 14 µm aufweist. Die mittlere Teilchengröße wird durch Partikelgrößenanalyse im Laserbeugungsverfahren nach DIN/ISO 13320-1 [1999] bestimmt.

In einer alternativen Ausgestaltung ist es erfindungsgemäß bevorzugt, wenn die Kieselsäure eine mittlere Teilchengröße (d50) im Bereich von 4 bis 18 µm aufweist, vorzugsweise eine Teilchengröße im Bereich von 5 bis 12 µm aufweist, ganz besonders bevorzugt im Bereich von 6 bis 10 µm aufweist. Die mittlere Teilchengröße wird durch Partikelgrößenanalyse im Laserbeugungsverfahren nach DIN/ISO 13320-1 [1999] bestimmt.

Ein Laser-Streulichtspektrometer arbeitet auf Grundlage der statistischen Laserlichtstreuung gemäß DIN/ISO 13320-1 [1999] im Messbereich von 0,01 µm bis 3000 µm. Eine Umstellung am Gerät ist dafür nicht erforderlich. Für die automatisierte Messung wird die Partikelprobe in eine Zirkulationseinheit zur Nassmessung gegeben. Eine integrierte Ultraschallsonde verhindert das Vernetzen der Partikel und macht eine externe Probenvorbereitung überflüssig. Bei der Wechselwirkung von Laserlicht mit Partikeln werden durch Beugung, Brechung, Reflexion und Absorption für die Partikelgröße charakteristische Streulichtmuster erzeugt. Mit der Mie-Theorie kann von diesen Streulichtmustern auf die Partikelgrößenverteilung geschlossen werden.

Bei der Laserbeugung werden Partikelgrößenverteilungen durch Messung der Winkelabhängigkeit der Intensität von gestreutem Licht eines Laserstrahls, der eine dispergierte Kieselsäure-Partikelprobe durchdringt, ermittelt. Hierbei streuen große Partikel Licht mit kleinen Winkeln relativ zum Laserstrahl, während kleine Partikel zu großen Streuwinkeln führen. Die Daten der winkelabhängigen Streulichtintensität werden analysiert und sind die Basis zur Berechnung der Größe der Partikel, die für das Beugungsmuster verantwortlich sind. Dabei wird die Mie-Theorie genutzt. Die Partikelgröße wird als Durchmesser der volumengleichen Kugel angegeben. Die von Mie 1908 entwickelte Streulichttheorie basiert auf der Aussage, dass das von einem Partikel erzeugte Streulichtmuster charakteristische Merkmale aufweist, die bei Kenntnis der optischen Parameter eine eindeutige Größenzuordnung ermöglichen. Für Partikel, die deutlich größer als 10 -20 µm sind, wird als Vereinfachung die sogenannte Fraunhofer-Auswertung angeboten, die nur die Lichtbeugung auswertet und damit ohne die korrekten optischen Parameter auskommt.

Eigene Untersuchungen haben gezeigt, dass Kieselsäuren, deren mittlere Teilchengröße in den oben genannten Bereichen liegt, einen besonders starken Einfluss auf die Bedruckbarkeit des mit der erfindungsgemäßen Beschichtungszusammensetzung hergestellten Schichtverbundes haben.

Erfindungsgemäß bevorzugt ist eine Beschichtungszusammensetzung, wobei die Kieselsäure eine spezifische Oberfläche (N₂) im Bereich von 100 bis 300 m²/g, vorzugsweise im Bereich von 150 bis 250 m²/g, ganz besonders bevorzugt im Bereich von 170 bis 210 m²/g aufweist. Die spezifische Oberfläche wird nach ISO 9277 bestimmt.

Erfindungsgemäß bevorzugt ist eine Beschichtungszusammensetzung, wobei die Kieselsäure eine Di(2-ethylhexyl)adipat Absorption (DOA-Absorption) im Bereich von 150 bis 350 ml/100g aufweist, vorzugsweise im Bereich von 200 bis 300 ml/100g, ganz besonders bevorzugt im Bereich von 220 bis 260 ml/100g aufweist. Die DOA-Absorption wird in Anlehnung an ISO 19246: 2016-07 bestimmt.

Die ISO 19246: 2016-07 legt ein allgemeines Verfahren zur Bestimmung der Flüssigkeitsabsorptionskapazität eines Pigments, hier Kieselsäure und damit die Ölabsorption gefällter Kieselsäure unter Verwendung von Di(2-ethylhexyl)adipat (DOA, CAS 103-23-1, Adipinsäureester des 2-Ethylhexanol; Di-octyladipat) fest. Die Bestimmung der DOA-Absorptionszahl erfolgt unter Verwendung eines Absorptometers. Die DOA-Absorptionszahl gibt einen Hinweis auf das durch die Aggregate und Agglomerate der Pigmente gebildete Hohlraumvolumen. Ein Absorptometer ist eine Vorrichtung mit Drehmoment-Messsystem (Dynamometer) zur genauen und reproduzierbaren Messung der DOA-Absorptionszahl von Pigmenten. Das Messprinzip basiert auf der Konsistenzveränderung des Pulvers bei der Absorption von DOA, diese Konsistenzveränderung wird messtechnisch erfasst. Das Absorptometer weist hierzu im Wesentlichen zwei Komponenten auf, eine Antriebseinheit mit Drehmoment-Messsystem und einem daran angebauten Messkneter mit Spezialschaufeln. Das Drehmoment wird während des gesamten speziellen Knetvorgangs gemessen und aufgezeichnet. Mit Unterstützung einer automatischen Präzisionsdosierpumpe wird das DOA nach und nach zu dem Kieselsäure-Pulver im Messkneter hinzutitriert. Die Flüssigkeit DOA wird von der Kieselsäurestruktur absorbiert und das Pulver agglomeriert. Dadurch steigt das für den Knetvorgang benötigte Drehmoment und erreicht schließlich ein Maximum. Die DOA-Absorptionszahl wird in Anlehnung an die ISO 19246: 2016-07 in ml (absorbierten DOA) pro 100 g Probenmaterial angegeben.

Erfindungsgemäß bevorzugt ist eine Beschichtungszusammensetzung, wobei die Beschichtungszusammensetzung keine weiteren Pigmente enthält.

Erfindungsgemäß bevorzugt ist eine Beschichtungszusammensetzung, wobei das Alkylen/(Meth)Acrylsäure-Copolymer ein Ethylen/(Meth)Acrylsäure-Copolymer, Propylen/(Meth)Acrylsäure-Copolymer, ein Butylen/(Meth)Acrylsäure-Copolymer oder ein isoButylen/(Meth)Acrylsäure-Copolymer ist, vorzugsweise ein Ethylen/(Meth)Acrylsäure-Copolymer ist, wobei besonders bevorzugt das Alkylen/(Meth)Acrylsäure-Copolymer ein Ethylen/Acrylsäure-Copolymer ist.

Die Herstellung von Ethylen/Acrylsäure-Copolymeren wird beispielsweise in der DE 32 07 744 A1 beschrieben.

Erfindungsgemäß bevorzugt ist eine Beschichtungszusammensetzung, wobei das Alkylen/(Meth)Acrylsäure-Copolymer linear oder verzweigt ausgebildet ist.

Erfindungsgemäß bevorzugt ist eine Beschichtungszusammensetzung, wobei das Alkylen/(Meth)Acrylsäure-Copolymer, vorzugsweise ein Ethylen/Acrylsäure-Copolymer, einen Schmelzpunkt im Bereich von 80 bis 140°C, vorzugsweise im Bereich von 95 bis 125°C, ganz besonders bevorzugt im Bereich von 105 bis 115°C aufweist.

Eigene Untersuchungen haben gezeigt, dass die mit der erfindungsgemäßen Beschichtungszusammensetzung hergestellten Schichtverbunde, die neben dem Vernetzer ein Ethylen/Acrylsäure-Copolymer enthalten, eine besonders gute Wasserbeständigkeit aufweisen.

Erfindungsgemäß bevorzugt ist eine Beschichtungszusammensetzung, wobei der Vernetzer zumindest eine funktionelle Gruppe aufweist, ausgewählt aus der Gruppe bestehend aus einer Aldehydgruppe, Amingruppe, Carboxylgruppe, Carboxylatgruppe und Hydrazidgruppe.

Erfindungsgemäß besonders bevorzugt ist eine Beschichtungszusammensetzung, wobei der Vernetzer ausgewählt ist aus der Gruppe bestehend aus Polyamidamin/Epichlorhydrin-Harz, Epiochlorhydrinharz, Polyamin, Epoxyharz, Natriumglyoxylat, Calciumglyoxylat, Natrium/Calciumglyoxylat, 1,3-Bis(aminomethyl)cyclohexan, Methylolmelamin, Zirconium(IV)-oxid, Zirconylchlorid, Metallsalzen, Borsäure, Dialdehyd, Formaldehydoligomere, Adipinsäuredihydrazid, Dimethylharnstoff, Melaminformaldehyd, Methaxylendiamin und Mischungen daraus. In einer erfindungsgemäßen Ausgestaltung wird eine Mischung aus zwei oder mehr Vernetzern, vorzugsweise den oben genannten Vernetzer verwendet.

Erfindungsgemäß bevorzugt ist eine Beschichtungszusammensetzung, wobei die Beschichtungszusammensetzung einen modifizierten Polyvinylalkohol enthält, vorzugsweise einen acetoacetyl-modifizierten Polyvinylalkohol, carboxylgruppen-modifizierten Polyvinylalkohol, silanolgruppen-modifizierten Polyvinylalkohol oder diaceton-modifizierten Polyvinylalkohol enthält, ganz besonders bevorzugt einen acetoacetyl-modifizierten Polyvinylalkohol enthält.

Eigene Untersuchungen haben gezeigt, dass die mit der erfindungsgemäßen Beschichtungszusammensetzung hergestellten Schichtverbunde, die neben dem Vernetzer ein Ethylen/Acrylsäure-Copolymer und einen acetoacetyl-modifizierten Polyvinylalkohol enthalten, eine hervorragende Wasserbeständigkeit aufweisen.

In einer besonders bevorzugten Ausgestaltung einer erfindungsgemäßen Beschichtungszusammensetzung enthält die Beschichtungszusammensetzung zwei unterschiedliche acetoacetyl-modifizierten Polyvinylalkohole, wobei vorzugweise die Viskosität bei 20°C des ersten acetoacetyl-modifizierten Polyvinylalkohols im Bereich von 10 bis 16 mPa s liegt, vorzugweise im Bereich von 11,5 bis 15 mPa s liegt, und die Viskosität bei 20°C des zweiten acetoacetyl-modifizierten Polyvinylalkohols im Bereich von 35 bis 55 mPa s liegt, vorzugweise im Bereich von 43 bis 59 mPa s liegt. Die Viskosität wird bei 20°C in einer wässrigen Lösung mit einem Massenanteil von 0,04 an acetoacetyl-modifizierten Polyvinylalkohol bestimmt.

Die Viskosität von Polymeren ist ein Maß für die molare Masse des Polymers. Bevorzugt sind somit erfindungsgemäße Beschichtungszusammensetzungen, die zwei unterschiedliche acetoacetyl-modifizierte Polyvinylalkohole mit unterschiedlichen molaren Massen enthalten oder ein acetoacetyl-modifiziertes Polyvinylalkohol mit einer bimodalen Molmassenverteilung.

Erfindungsgemäß bevorzugt ist eine Beschichtungszusammensetzung, wobei die Beschichtungszusammensetzung einen ersten acetoacetyl-modifizierten Polyvinylalkohol enthält, der einen Verseifungsgrad im Bereich von 97 bis 99 mol% aufweist, und/oder einen zweiten acetoacetyl-modifizierten Polyvinylalkohol enthält, der einen Verseifungsgrad im Bereich von 95 bis 97 mol% aufweist.

Erfindungsgemäß bevorzugt ist eine Beschichtungszusammensetzung, wobei die Beschichtungszusammensetzung
a) 0,30 bis 0,70, vorzugsweise 0,40 bis 0,60, ganz besonders bevorzugt 0,45 bis 0,55 Massenanteile modifizierter oder unmodifizierter Polyvinylalkohole,
b) 0,05 bis 0,10, vorzugsweise 0,01 bis 0,07, ganz besonders bevorzugt 0,02 bis 0,05 Massenanteile Alkylen/(Meth)Acrylsäure-Copolymer
c) 0,005 bis 0,07, vorzugsweise 0,01 bis 0,05, ganz besonders bevorzugt 0,01 bis 0,03 Massenanteile Vernetzer
   und/oder
d) 0,20 bis 0,50, vorzugsweise 0,25 bis 0,45, ganz besonders bevorzugt 0,30 bis 0,40 Massenanteile eines, zweier oder der mehr als zwei Pigmente enthält.

Erfindungsgemäß besonders bevorzugt ist eine Beschichtungszusammensetzung umfassend
a) einen acetoacetyl-modifizierten Polyvinylalkohol,
b) ein Ethylen/Acrylsäure-Copolymer, vorzugsweise in den oben genannten Schmelzpunktbereichen,
c) einen Vernetzer und
d) Kaolin und Kieselsäure als Pigmente,
wobei die Kieselsäure die oben genannten mittleren Teilchengrößenbereiche aufweist.

Die erfindungsgemäße Beschichtungszusammensetzung kann als Barrierestrich oder Deckstrich verwendet werden. Bevorzugt ist die Verwendung als Deckstrich zur Herstellung einer Deckschicht.

Der Begriff "Barrierestrich" bezeichnet im Rahmen der vorliegenden Erfindung somit eine auf eine Trägerschicht (einseitig oder beidseitig) aufgebrachte Beschichtung (fachsprachlich als "Strich" bezeichnet), durch die die Trägerschicht mit Barriereeigenschaften ausgestattet wird, indem der Barrierestrich den Durchtritt eines mobilen Stoffes, insbesondere von Fett und/oder Öl und/oder Feuchtigkeit, durch die Trägerschicht verhindert. Das Aufbringen dieser Beschichtung, das heißt des Barrierestrichs wird fachsprachlich auch als "streichen" und die aufzutragende Beschichtung als "Streichfarbe" bezeichnet. Durch das Auftragen eines Barrierestrichs auf die Trägerschicht entsteht ein Schichtverbund aus mindestens zwei Schichten. Dieser Schichtverbund kann mit der erfindungsgemäßen Veredelungsschicht, erzeugt aus der erfindungsgemäßen Beschichtungszusammensetzung, versehen werden.

Schichtverbunde, beispielsweise mit Papier, synthetischem Papier oder Kunststofffolien als Trägerschicht, werden häufig mit einer Veredelungsschicht versehen, um die Eigenschaften des Schichtverbundes zu verbessern bzw. zu verändern. Durch eine Veredelungsschicht kann beispielsweise die Bedruckbarkeit, z.B. durch Offsetdruck, oder die Beständigkeit des Aufzeichnungsmaterials gegenüber äußeren Einflüssen verbessert werden.

Sofern die Trägerschicht im erfindungsgemäßen Schichtverbund aus Papier besteht und mindestens ein Barrierestrich aufgebracht wurde, wird dieser Schichtverbund auch als Barrierepapier bezeichnet. Der Begriff "Barrierepapier" bezeichnet im Rahmen der vorliegenden Erfindung ein Spezialpapier, wobei das Barrierepapier beispielsweise durch seine Beschaffenheit und/oder Aufbau mit einer Barriere (d.h. ein Hindernis) gegen den unerwünschten Durchtritt bestimmter Stoffe wie beispielsweise mobile (z. B. Poren-mobile und/oder infolge von Kapillarkräften mobile) hydrophile und/oder hydrophobe, gegebenenfalls auch amphiphile, Stoffe ausgerüstet ist. Bevorzugt bezeichnet der Begriff "mobile Stoffe" üblicherweise in Lebensmitteln enthaltene Stoffe wie z. B. Fett und/oder Öl und/oder Feuchtigkeit. Insbesondere bezeichnet der Begriff "Barrierepapier" somit hochfettdichte und/oder wasser- bzw. feuchtigkeitsdichte Barrierepapiere für Lebensmittelanwendungen. Spezialpapiere werden hierbei vom Fachmann grundsätzlich in "ungestrichene" Papiere (beispielsweise im Rahmen der vorliegenden Erfindung beispielsweise die Trägerschicht aus Papier) und in "gestrichene" Papiere (beispielsweise im Rahmen der vorliegenden Erfindung das Barrierepapier umfassend mindestens einen "Barrierestrich") unterschieden werden.

Lose angebotene Lebensmittel, wie Wurst-, Käse- oder Backwaren, werden aus Hygiene- oder Frischhaltegründen üblicherweise in einer Verpackung an Kunden übergeben. Hohe Anforderungen an die Verpackung werden dabei insbesondere bei fetthaltigen Lebensmitteln gestellt. Bei der Verwendung von herkömmlichen Verpackungen auf Basis von Papier kann bei fetthaltigen Lebensmitteln ein Durchdringen des Verpackungsmaterials mit dem Fett aus dem Lebensmittel erfolgen. Dies kann dazu führen, dass das Verpackungsmaterial aufweicht und reißt oder dass eine Verunreinigung von anderen Gegenständen mit dem Fett erfolgt, wenn Sie in Kontakt mit der Verpackung kommen.

Durch die erfindungsgemäße Beschichtungszusammensetzung kann die Offsetbedruckbarkeit von Lebensmittelverpackungen sowie Wasserbeständigkeit deutlich erhöht werden. Die erfindungsgemäße Beschichtungszusammensetzung kann zur Erzeugung einer Barriereschicht aufgetragen werden oder zur Veredelung einer bereits mit einer Barriereschicht versehenen Trägerschicht, beispielsweise aus Papier, eingesetzt werden. In beiden Ausführungsformen kommt die verbesserte Wasserbeständigkeit sowie die verbesserte Bedruckbarkeit voll zum Tragen, es wird jeweils ein Schichtverbund ausgebildet, welcher mindestens eine Schicht aufweist, welche aus der erfindungsgemäßen Beschichtungszusammensetzung gebildet ist.

Es ist erfindungsgemäß bevorzugt, wenn die erfindungsgemäße Beschichtungszusammensetzung keine N,N-Dialkylalkanolamine umfasst.

Ein weiterer Aspekt der vorliegenden Erfindung betrifft einen Schichtverbund umfassend eine Trägerschicht und eine Veredelungsschicht, wobei die Veredelungsschicht aus einer erfindungsgemäßen Beschichtungszusammensetzung hergestellt wurde.

In einer Ausgestaltung des erfindungsgemäßen Schichtverbundes wird die Trägerschicht vollständig oder teilweise mit einer Veredelungsschicht bedeckt.

Erfindungsgemäß bevorzugt ist ein Schichtverbund, wobei die Trägerschicht ein Papier, synthetisches Papier oder eine Kunststofffolie ist.

Erfindungsgemäß bevorzugt ist ein Schichtverbund, wobei der Schichtverbund eine zwischen der Trägerschicht und der Beschichtungszusammensetzung angeordnete wärmeempfindliche Aufzeichnungsschicht umfasst, wobei die wärmeempfindliche Aufzeichnungsschicht einen Farbstoffvorläufer und einen Farbentwickler umfasst und der Farbentwickler bei Wärmeeinwirkung eine Farbbildung im Farbstoffvorläufer induzieren kann.

Erfindungsgemäß bevorzugt ist ein Schichtverbund, wobei die wärmeempfindliche Aufzeichnungsschicht ein Bindemittel enthält, vorzugsweise ein vernetztes oder unvernetztes Bindemittel enthält, ausgewählt aus der Gruppe bestehend aus Polyvinylalkohol, acetoacetyl-modifiziertem Polyvinylalkohol, carboxylgruppen-modifiziertem Polyvinylalkohol, Ethylen-Vinylalkohol-Copolymer, einer Kombination aus Polyvinylalkohol und Ethylen-Vinylalkohol-Copolymer, silanolgruppen-modifiziertem Polyvinylalkohol, diaceton-modifiziertem Polyvinylalkohol, Acrylat-Copolymer und filmbildenden Acrylcopolymeren. Besonders bevorzugt ist ein acetoacetyl-modifiziertes Polyvinylalkohol als Bindemittel vorgesehen.

Eigene Untersuchungen haben gezeigt, dass diese Bindemittel besonders gut für den Einsatz in der wärmeempfindlichen Aufzeichnungsschicht geeignet sind.

Erfindungsgemäß bevorzugt ist ein Schichtverbund, wobei die wärmeempfindliche Aufzeichnungsschicht neben einem weiteren Bindemittel einen acetoacetyl-modifizierten Polyvinylalkohol enthält.

Während der Ausbildung der Veredelungsschicht nach dem Auftragen der erfindungsgemäßen Beschichtungszusammensetzung vernetzt der Vernetzer den modifizierten oder unmodifizierten Polyvinylalkohol und/oder das Alkylen/(Meth)Acrylsäure-Copolymer miteinander, sodass ein vernetztes Polymer resultiert. Die Vernetzung kann dabei a) zwischen zwei verschiedenen Polyvinylalkoholmolekülen oder zwischen zwei unterschiedlichen Stellen eines Polyvinylalkoholmoleküls erfolgen, b) zwischen zwei verschiedenen Alkylen/(Meth)Acrylsäure-Copolymermolekülen oder zwischen zwei unterschiedlichen Stellen eines Alkylen/(Meth)Acrylsäure-Copolymermoleküls erfolgen oder c) zwischen einem Polyvinylalkoholmolekül und einem Alkylen/(Meth)Acrylsäure-Copolymermolekül erfolgen. Es resultiert ein permanentes Polymernetzwerk.

Es hat sich in eigenen Untersuchungen gezeigt, dass durch die Verwendung eines acetoacetyl-modifizierten Polyvinylalkohols in der wärmeempfindlichen Aufzeichnungsschicht die Haftung zwischen der wärmeempfindlichen Aufzeichnungsschicht und der Veredelungsschicht signifikant verbessert werden kann. Durch eine verbesserte Haftung zwischen der wärmeempfindlichen Aufzeichnungsschicht und der Veredelungsschicht wird zudem die Offsetbedruckbarkeit noch weiter verbessert, da ein Ablösen der Veredelungsschicht oder Teilen der Veredelungsschicht verhindert werden kann.

Erfindungsgemäß besonders bevorzugt ist ein Schichtverbund, in dem sowohl in der Veredelungsschicht als auch in der wärmeempfindlichen Aufzeichnungsschicht ein acetoacetyl-modifiziertes Polyvinylalkohol als Bindemittel enthalten ist.

Weiterhin ist erfindungsgemäß besonders bevorzugt ein Schichtverbund, in dem sowohl in der Veredelungsschicht als auch in der Barriereschicht ein acetoacetyl-modifiziertes Polyvinylalkohol als Bindemittel enthalten ist.

Erfindungsgemäß bevorzugt ist ein Schichtverbund, wobei der Farbstoffvorläufer ausgewählt ist aus Derivaten von Verbindungen aus der Gruppe bestehend aus Fluoran, Phthalid, Lactam, Triphenylmethan, Phenothiazin und Spiropyran.

Erfindungsgemäß bevorzugt ist ein Schichtverbund, wobei der Farbstoffvorläufer ausgewählt ist aus der Gruppe bestehend aus 3-Diethylamino-6-methyl-7-anilinofluoran, 3-Diethylamino-6-methyl-7-(3'-methylphenylamino)fluoran (6'-(diethylamino)-3'-methyl-2'-(m-tolylamino)-3H-spiro[isobenzofuran-1,9'-xanthen]-3-one; ODB-7), 3-Di-n-pentyl-amino-6-methyl-7-anilinofluoran, 3-(Diethylamino)-6-Methyl-7-(3-Methylphenylamino)fluoran, 3-Di-n-butylamino-7-(2-chloranilino)fluoran, 3-Diethylamino-7-(2-chloranilino)fluoran, 3-Diethylamino-6-methyl-7-xylidinofluoran, 3-Diethylamino-7-(2-carbomethoxyphenylamino)fluoran, 3-Pyrrolidino-6-methyl-7-anilinofluoran, 3-Pyrrolidino-6-methyl-7-(4-n-butyl-phenylamino)fluoran, 3-Piperidino-6-methyl-7-anilinofluoran, 3-N-n-Dibutylamin-6-methyl-7-anilinofluoran (ODB-2), 3-(N-Methyl-N-cyclohexyl)amino-6-methyl-7-anilinofluoran, 3-(N-Methyl-N-propyl)amino-6-methyl-7-anilinofluoran, 3-(N-Methyl-N-tetrahydrofurfuryl)amino-6-methyl-7-anilinofluoran), 3-(N-Ethyl-N-isoamyl)amino-6-methyl-7-anilinofluoran, 3-(N-Ethyl-N-tolyl)amino-6-methyl-7-anilinofluoran, 3-(N-Ethyl-N-tetrahydrofuryl)amino-6-methyl-7-anilinofluoran, 3-(N-Ethyl-N-isopentylamino)-6-methyl-7-anilinofluoran, 3-(N-Ethyl-4-toluidino)6-methyl-7-(4-toluidino)fluoran und 3-(N-Cyclopentyl-N-ethyl)amino-6-methyl-7-anilinofluoran.

Erfindungsgemäß bevorzugt ist ein Schichtverbund, wobei der Farbstoffvorläufer ausgewählt ist aus der Gruppe bestehend aus 3-N-Di-n-butylamin-6-methyl-7-anilinofluoran (ODB-2) und 3-(N-Ethyl-N-isopentylamino)-6-methyl-7-anilinofluoran.

Erfindungsgemäß bevorzugt ist ein Schichtverbund, wobei der Farbentwickler ausgewählt ist aus der Gruppe bestehend aus 4,4'-Dihydroxydiphenylsulfon (CAS 80-09-1; BisphenolS), 4-[2-(4-Hydroxyphenyl)propan-2-yl]phenol (Bisphenol-A), N-(4-Methylphenylsulfonyl)-N'-(3-(4-methylphenylsulfonyloxy)phenyl)harnstoff (Pergafast 201), 4-Hydroxy-4'-isopropoxydiphenylsulfon (D8) und N-{2-[(Phenylcarbamoyl)amino]phenyl}benzolsulfonamid (NKK), 4,4'-Isopropylidene-di-o-cresol (CAS 79-97-0; Bisphenol C), 2,4'-Dihydroxydiphenylsulfon, 2,4'-Sulfonyldiphenol (CAS 5397-34-2; 2,4'-Bisphenol S), Bis[4-(2-hydroxyethoxy)phenyl]sulfon, 2,2'-[sulphonylbis(4,1-phenyleneoxy)]bisethanol (CAS 27205-03-4), Diphenylsulfon (CAS 127-63-9, DPS).

Erfindungsgemäß bevorzugt ist ein Schichtverbund, wobei es sich bei dem Farbentwickler um einen Farbenwickler oder um ein Gemisch aus zwei oder mehr Farbentwicklern handelt.

Erfindungsgemäß bevorzugt ist ein Schichtverbund, wobei die wärmeempfindliche Aufzeichnungsschicht einen Sensibilisator enthält, vorzugsweise einen Sensibilisator ausgewählt aus der Gruppe bestehend aus Fettsäuresalzen, Fettsäureester und Fettsäureamiden (z.B. Zinkstearat, Stearinsäureamid, Palmitinsäureamid, Oleinsäureamid, Laurinsäureamid, Ethylen- und Methylenbisstearinsäureamid, Methylolstearinsäureamid), Naphthalinderivaten, Biphenylderivaten, Phtalaten und Terephtalaten.

Erfindungsgemäß bevorzugt ist ein Schichtverbund, wobei der Sensibilisator ausgewählt ist aus der Gruppe bestehend aus 1,2-Bis(3-methylphenoxy)ethan, 1,2-Diphenoxyethan, 1,2-Di(m-methylphenoxy)ethan, 2-(2H-Benzotriazol-2-yl)-p-cresol, 2,2'-Bis(4-methoxyphenoxy)diethylether, 4,4'-Diallyloxydiphenylsulfon, 4-Acetylacetophenon, 4-Benzybiphenyl, Acetoessigsäureaniliden, Benzyl-2-naphthylether, Benzylnaphthylether, Benzyl-4-(benzyloxy)benzoat, Benzylparaben, Bis(4-chlorbenzyl)oxalatester, Bis(4-methoxyphenyl)ether, Dibenzyloxalat, Dibenzylterephthtalat, Dimethylterephtalat, Dimethylsulfon, Diphenyladipat, Diphenylsulfon, Ethylenbisstearinsäureamid, Fettsäureaniliden, m-Terpenyl, N-Hydroxymethylstearinsäureamid, N-Methylolstearamid, N-Stearylharnstoff, N-Stearylstearinsäureamid, p-Benzylbiphenyl, Phenylbenzolsulfonatester, Salicylsäureanilid, Stearamid und α,α'-Diphenoxyxylen, wobei Benzyl-2-naphthylether, Benzylnaphthylether, Diphenylsulfon, 1,2-Di(m-methylphenoxy)ethan und 1,2-Diphenoxyethan besonders bevorzugt sind.

Ganz besonders bevorzugt ist ein Schichtverbund umfassend eine Trägerschicht und eine Veredelungsschicht, wobei die Veredelungsschicht aus einer erfindungsgemäßen Beschichtungszusammensetzung hergestellt wurde, wobei der Schichtverbund eine zwischen der Trägerschicht und der Beschichtungszusammensetzung angeordnete wärmeempfindliche Aufzeichnungsschicht umfasst, wobei die wärmeempfindliche Aufzeichnungsschicht einen Farbstoffvorläufer und einen Farbentwickler umfasst und der Farbentwickler bei Wärmeeinwirkung eine Farbbildung im Farbstoffvorläufer induzieren kann, wobei sowohl in der Veredelungsschicht als auch in der wärmeempfindlichen Aufzeichnungsschicht ein acetoacetyl-modifiziertes Polyvinylalkohol als Bindemittel enthalten ist.

Dabei ist es insbesondere bevorzugt, wenn die Veredelungsschicht die Deckschicht ist.

Erfindungsgemäß besonders bevorzugt ist ein Schichtverbund, bei dem die Veredelungsschicht eine Deckschicht ist und diese Deckschicht eine Rauheit nach Print-Surf von größer als 0,6 µm aufweist, vorzugsweise größer als 1 µm, besonders bevorzugt größer als 1,4 µm. Die Bestimmung der Rauheit nach Print-Surf erfolgt gemäß DIN ISO 8791-4:2008-05. Es ist erfindungsgemäß bevorzugt, wenn die Veredelungsschicht eine Deckschicht ist und eine nach ISO 5627 bestimmte Bekk-Glätte im Bereich von 100 bis 1200 s, vorzugsweise 300 bis 900 s, besonders bevorzugt 550 bis 850 s aufweist. Abweichend zur ISO 5627 wird die Bekk-Glätte in diesem Fall nicht beidseitig auf dem Papier bestimmt, sondern nur auf der Veredelungsschicht des Schichtverbunds.

Es hat sich in eigenen Untersuchungen gezeigt, dass die Bedruckbarkeit des Schichtverbundes besonders gut ist, wenn die oben beschriebene Rauigkeit nach Print-Surf und/oder die Bekk-Glätte eingestellt wird.

Es ist erfindungsgemäß bevorzugt, wenn der Schichtverbund eine nach ISO 5627 bestimmte Bekk-Glätte im Bereich von 100 bis 1200 s, vorzugsweise 300 bis 900 s, besonders bevorzugt 550 bis 850 s aufweist.

Ein weiterer Aspekt der vorliegenden Erfindung betrifft die Verwendung eines erfindungsgemäßen Schichtverbundes als Eintrittskarte, Flug-, Bahn-, Schiff- oder Busticket, Glücksspielbeleg, Parkticket, Etikett, Kassenbon, Bankauszug, Selbstklebeetikett, medizinisches Diagrammpapier, Faxpapier, Sicherheitspapier oder Barcode-Etikett.

Ein weiterer Aspekt der vorliegenden Erfindung betrifft eine Verwendung einer Mischung aus Ethylen/Acrylsäure-Copolymer und acetoacetyl-modifizierten Polyvinylalkohol in einer Schicht eines Schichtverbundes.

Eine erfindungsgemäße Verwendung ist bevorzugt, wobei es sich bei der Schicht um eine Deckschicht handelt.

Erfindungsgemäß bevorzugt ist eine Verwendung, wobei es sich bei dem Schichtverbund um ein wärmeempfindliches Aufzeichnungsmaterial handelt.

Ein weiterer Aspekt der vorliegenden Erfindung betrifft ein Verfahren zur Herstellung eines Schichtverbundes, vorzugsweise zur Herstellung eines erfindungsgemäßen Schichtverbundes, mindestens umfassend folgende Verfahrensschritte:
i) Bereitstellen oder Herstellen einer Beschichtungszusammensetzung umfassend
   a) einen modifizierten oder unmodifizierten Polyvinylalkohol,
   b) ein Alkylen/(Meth)Acrylsäure-Copolymer
   c) einen Vernetzer und
   d) ein, zwei oder mehr als zwei Pigmente,
   wobei es sich bei der Beschichtungszusammensetzung vorzugsweise um eine erfindungsgemäße Beschichtungszusammensetzung handelt;
ii) Aufbringen der bereitgestellten oder hergestellten Beschichtungszusammensetzung aus Verfahrensschritt i) auf ein Substrat;
iii) Trocknen der in Verfahrensschritt ii) aufgebrachten Beschichtungszusammensetzung unter Ausbildung einer Veredelungsschicht.

Erfindungsgemäß bevorzugt ist ein Verfahren zusätzlich umfassend die folgenden Verfahrensschritte:
a) Bereitstellen oder Herstellen eines Trägersubstrates;
b) Bereitstellen oder Herstellen einer Beschichtungszusammensetzung umfassend einen Farbstoffvorläufer und einen Farbentwickler;
c) Aufbringen der in Verfahrensschritt b) bereitgestellten oder hergestellten Beschichtungszusammensetzung;
d) Trocknen der in Verfahrensschritt c) aufgebrachten Beschichtungszusammensetzung unter Ausbildung einer wärmeempfindlichen Aufzeichnungsschicht,
wobei die Schritte a) bis d) vor dem Schritt i) durchgeführt werden und das in Verfahrensschritt d) hergestellte mit einer wärmeempfindlichen Aufzeichnungsschicht beschichtete Trägersubstrat als Substrat in Verfahrensschritt ii) dient, wobei die in Verfahrensschritt i) bereitgestellte oder hergestellte Beschichtungszusammensetzung in Verfahrensschritt ii) vorzugsweise auf die wärmeempfindliche Aufzeichnungsschicht aufgebracht wird.

Erfindungsgemäß bevorzugt ist ein Verfahren, wobei das in Verfahrensschritt a) bereitgestellte oder hergestellte Trägersubstrat ein Papier, synthetisches Papier oder eine Kunststofffolie ist und vorzugweise mit einem Vorstrich versehen ist.

Im Rahmen der vorliegenden Erfindung werden vorzugsweise mehrere der vorstehend als bevorzugt bezeichneten Aspekte gleichzeitig verwirklicht; insbesondere bevorzugt sind die sich aus den beigefügten Ansprüchen ergebenden Kombinationen solcher Aspekte und der entsprechenden Merkmale.

Die nachfolgenden Beispiele und Vergleichsbeispiele werden die Erfindung weiter verdeutlichen:
In der Papierherstellung werden drei Grade für den Trockengehalt von Papier und Zellstoff unterschieden "atro" (absolut trocken), "lutro" (lufttrocken) und "otro" (ofentrocken). Die Angabe erfolgt jeweils in "% atro", "% lutro" und "% otro". Wobei "atro" für ein Papier oder Zellstoff mit 0 % Wassergehalt steht. Für "lutro" wird hierbei ein "normaler" (für das Papier grundsätzlich notwendiger) Feuchtigkeitsgehalt als Basis der Berechnung eingesetzt. Bei Zellstoff und Holzschliff bezieht sich die Rechnungsmasse in der Regel auf 90:100, das heißt 90 Teile Stoff, 10 Teile Wasser. Der Zustand von Papier oder Zellstoff nach der Trocknung unter festgelegten, definierten Bedingungen wird als "otro" bezeichnet.

### Beispiel 1:

Es wird eine erfindungsgemäße Beschichtungszusammensetzung hergestellt. Zur Herstellung der Beschichtungszusammensetzung werden die in Tabelle 1 wiedergegebenen Bestandteile vermischt.

**Tabelle 1**

| **Komponente** | **Bestandteil** | **Massenanteile w(x) (atro)** |
|---|---|---|
| Pigment | Kaolin (Handelsname: ASP 179) | 0,30 bis 0,40 |
| Pigment | Kieselsäure (Handelsname: Sipernat 22S) | 0,020 bis 0,040 |
| Polyvinylalkohol | Acetoacetyl-modifiziertes PVA (Handelsname: Gohsenx Z-410) | 0,05 bis 0,15 |
| Polyvinylalkohol | Acetoacetyl-modifiziertes PVA (Handelsname: Gohsenx Z-200) | 0,20 bis 0,50 |
| Additiv | Zinkstearat (Handelsname: Hidorin Z-7-30) | 0,05 bis 0,07 |
| Vernetzer | Polyamidamin Epichlorhydrin Harz (Handelsname: Giluton 20XP) | 0,015 bis 0,035 |
| Alkylen/(Meth)-Acrylsäure-Copolymer | Ethylen-Acrylsäure Copolymer (Handelsname: Aquacer 1061) | 0,015 bis 0,040 |
| Vernetzer | Natrium/Calciumglyoxylat (Handelsname: SPM-01/SPM-02) | 0,005 bis 0,020 |

Es wird eine erfindungsgemäße Beschichtungszusammensetzung erhalten, welche zur Herstellung von Schichtverbunden (z.B. wärmeempfindliche Aufzeichnungsmaterialien) verwendet werden kann.

### Beispiel 2:

Als bahnförmiges Substrat wird auf einer Langsieb-Papiermaschine aus gebleichten und gemahlenen Laub- und Nadelholzzellstoffen unter Zugabe von, bezogen auf den Gesamtfeststoffgehalt (atro) der der Papiermaschine zugeführten Pulpe, 0,008 Massenanteil Harzleim als Masseleimung sowie weiterer üblicher Beischlagstoffe ein Trägerpapier mit einer flächenbezogenen Masse von 64 g/m² hergestellt.

Auf der Vorderseite wird eine kalziniertes Kaolin als Pigment, Styrol-Butadien-Latex als Bindemittel und neben weiteren Hilfsmitteln Stärke als Cobinder aufweisende Zwischenschicht mit einer flächenbezogenen Masse von 9 g/m² unter Nutzung eines Streichmessers aufgebracht.

Auf diese pigmentierte Zwischenschicht wird unter Nutzung einer Rollrakel-Streicheinrichtung eine wärmeempfindliche Aufzeichnungsschicht mit einer flächenbezogenen Masse von 2,5 g/m² aufgetragen. Die dazu verwendete wässrige Streichmasse enthält die folgenden Komponenten nach der in Tabelle 2 wiedergegebenen Rezeptur:

**Tabelle 2**

| Angaben in Massenanteilen w(x) (atro), bezogen auf die Gesamtmasse der wärmeempfindlichen Aufzeichnungsschicht | | |
|---|---|---|
| Farbstoffvorläufer | 3-dibutylamino-6-methyl-7-Anilinofluoran (ODB-2) | 0,10 bis 0,20 |
| Farbentwickler | N-(p-toluensulphonyl)-N'-3-(p-toluensulphonyl-Oxyphenyl)-harnstoff (Pergafast^{®} 201 (BASF)) | 0,20 bis 0,30 |
| Sensibilisator | Benzyl 2-naphthyl ether (BNE) | 0,20 bis 0,30 |
| Bindemittel | Ethylenvinylalkohol Copolymer (RS 2117) | 0,10 bis 0,20 |
| Bindemittel | Acetoacetyl-modifiziertes PVA (Handelsname: Gohsenx Z-200) | 0,010 bis 0,025 |
| Sensibilisator | Methylolamiddispersion (Hidorin D757) | 0,015 bis 0,030 |
| Additiv | Paraffinwax (Hidorin J 157) | 0,010 bis 0,025 |
| Additiv | Zinkstearat (Hidorin SZ 40) | 0,010 bis 0,025 |
| Optischer Aufheller | Hexanatrium-2,2'-{vinylenbis[(3-sulfonato-4,1-phenylen)imino[6-morpholino-1,3,5-triazin-4,2-diyl]-imino]}bis(benzol-1 ,4-disulfonat; CAS Nr. 52301 -70-9; Ciba Speciality Chemicals Inc.; Basel; CH) | 0,003 bis 0,007 |

Nach dem Auftrag der wärmeempfindlichen Aufzeichnungsschicht wird diese getrocknet und geglättet.

Auf diese getrocknete wärmeempfindliche Aufzeichnungsschicht wird unter Verwendung einer Rollrakel-Streicheinrichtung eine gemäß Beispiel 1 hergestellte erfindungsgemäße Beschichtungszusammensetzung mit einer flächenbezogenen Masse von 2 g/m² aufgetragen.

Es wird ein wärmeempfindliches Aufzeichnungsmaterial erhalten, bei dem es sich um einen Schichtverbund handelt.

Das hergestellte wärmeempfindliche Aufzeichnungsmaterial weist eine ausgesprochen gute Offsetbedruckbarkeit und eine ausgesprochen gute Wasserbeständigkeit auf.

### Vergleichsbeispiel 1:

Vergleichsbeispiel 1 wird analog zu Beispiel 2 durchgeführt, allerdings wird keine Kieselsäure als Pigment hinzugegeben und auf die Zugabe des Ethylen-Acrylsäure Copolymers wird verzichtet. Stattdessen wird die Menge an Kaolin und acetoacetyl-modifiziertes PVA (Handelsname: Gohsenx Z-200) entsprechend angepasst.

### Bestimmung der Wasserbeständigkeit:

Aus dem zu prüfenden wärmeempfindlichen Aufzeichnungsmaterial aus Beispiel 2 und Vergleichsbeispiel 1 wurden jeweils 5 cm mal 10 cm große Quadrate ausgeschnitten.

Die ausgeschnittenen Quadrate wurden jeweils in der Mitte gefaltet, sodass zwei 5 cm mal 5 cm große Bereiche der Strichseite aufeinanderlagen. Die Faltung wurde geöffnet und die Strichseite wurde mit einem Tropfen Wasser benetzt. Anschließend wurde die Faltung wieder geschlossen und zusammengedrückt. Die gefalteten und befeuchteten Quadrate wurden zwischen zwei Glasplatten gelegt, wobei zwischen die Quadrate ein Filterpapier gelegt wurde. Die Glasplatten wurden beschwert und 24 Stunden ruhen gelassen. Anschließend wurden die Quadrate separiert, vorsichtig entfaltet und für eine Stunde bei 90°C in einem Ofen getrocknet. Die Quadrate wurden anschließend aus dem Ofen genommen und beschwert.

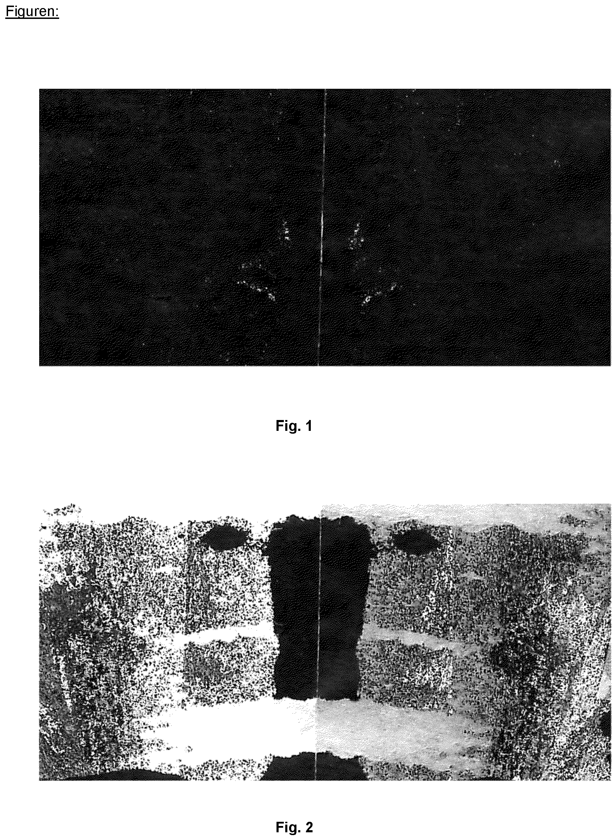

Das Quadrat, das aus dem gemäß Beispiel 2 hergestellten wärmeempfindlichen Aufzeichnungsmaterial hergestellt wurde, konnte ohne ein Ablösen der Oberfläche entfalten werden und die Oberfläche war gleichmäßig schwarz gefärbt. Eine Abbildung des Quadrates ist in Fig. 1 dargestellt.

Das Quadrat, das aus dem gemäß Vergleichsbeispiel 1 hergestellten wärmeempfindlichen Aufzeichnungsmaterial hergestellt wurde, wies ein Ablösen der Oberfläche beim Entfalten auf und die Oberfläche war nicht gleichmäßig schwarz gefärbt. Eine Abbildung des Quadrates ist in Fig. 2 dargestellt. Es kann davon ausgegangen werden, dass es beim Offsetdruck zu einem Ablösen der Oberfläche kommt und dass bei einer Lagerung in feuchtem Klima die thermische Bedruckbarkeit nicht sichergestellt werden kann.

### Mögliche Ausführungsformen der Erfindung:

1. Beschichtungszusammensetzung zur Herstellung eines Schichtverbundes umfassend
   a) einen modifizierten oder unmodifizierten Polyvinylalkohol,
   b) ein Alkylen/(Meth)Acrylsäure-Copolymer
   c) einen Vernetzer und
   d) ein, zwei oder mehr als zwei Pigmente.
2. Beschichtungszusammensetzung nach Ausführungsform 1, wobei zumindest ein Pigment, zwei Pigmente oder sämtliche Pigmente ausgewählt sind aus der Gruppe bestehend aus Aluminiumsilikat, Aluminiumoxid, Aluminiumhydroxid, Bariumsulfat, Bentonit, Böhmit, natürlichem Calciumcarbonat, gefälltem Calciumcarbonat, Diatomeenerde, Harnstoff-Formaldehyd-Harz, natürlichem Kaolin, kalziniertem Kaolin, Kaolinit oder calciniertem Kaolinit, Kieselgur, Kieselsäure, vorzugsweise gefällter Kieselsäure, Magnesiumsilikat, Magnesiumcarbonat, Satinweiß, Siliziumoxid, Talkum, Titanoxid, Tonerde, aktivierter Tonerde und Zinkoxid.
3. Beschichtungszusammensetzung nach einer der vorherigen Ausführungsformen, wobei die Beschichtungszusammensetzung zwei oder mehr als zwei Pigmente umfasst.
4. Beschichtungszusammensetzung nach einer der vorherigen Ausführungsformen, wobei die Beschichtungszusammensetzung als Pigment Kieselsäure enthält.
5. Beschichtungszusammensetzung nach einer der vorherigen Ausführungsformen, wobei die Beschichtungszusammensetzung als Pigment gefällte Kieselsäure enthält.
6. Beschichtungszusammensetzung nach einer der vorherigen Ausführungsformen, wobei die Beschichtungszusammensetzung zwei Pigmente umfasst, bei denen es sich um Kaolin und Kieselsäure handelt.
7. Beschichtungszusammensetzung nach Ausführungsform 6, wobei es sich bei der Kieselsäure um gefällte Kieselsäure handelt.
8. Beschichtungszusammensetzung nach einer der vorherigen Ausführungsformen, wobei das Alkylen/(Meth)Acrylsäure-Copolymer ein Ethylen/(Meth)Acrylsäure-Copolymer, Propylen/(Meth)Acrylsäure-Copolymer, ein Butylen/(Meth)Acrylsäure-Copolymer oder ein iso-Butylen/(Meth)Acrylsäure-Copolymer ist, vorzugsweise ein Ethylen/(Meth)Acrylsäure-Copolymer ist.
9. Beschichtungszusammensetzung nach einer der vorherigen Ausführungsformen, wobei das Alkylen/(Meth)Acrylsäure-Copolymer ein Ethylen/Acrylsäure-Copolymer ist.
10. Beschichtungszusammensetzung nach einer der vorherigen Ausführungsformen, wobei die Beschichtungszusammensetzung einen modifizierten Polyvinylalkohol enthält, vorzugsweise einen acetoacetyl-modifizierten Polyvinylalkohol, carboxylgruppen-modifizierten Polyvinylalkohol, silanolgruppen-modifizierten Polyvinylalkohol oder diaceton-modifizierten Polyvinylalkohol enthält, ganz besonders bevorzugt einen acetoacetyl-modifizierten Polyvinylalkohol enthält.
11. Beschichtungszusammensetzung nach einer der vorherigen Ausführungsformen, wobei die Beschichtungszusammensetzung einen acetoacetyl-modifizierten Polyvinylalkohol enthält.
12. Beschichtungszusammensetzung nach einer der vorherigen Ausführungsformen, wobei der Vernetzer zumindest eine funktionelle Gruppe aufweist, ausgewählt aus der Gruppe bestehend aus einer Aldehydgruppe, Amingruppe, Carboxylgruppe, Carboxylatgruppe und Hydrazidgruppe.
13. Beschichtungszusammensetzung nach einer der vorherigen Ausführungsformen, wobei die Beschichtungszusammensetzung
   a) 0,30 bis 0,70, vorzugsweise 0,40 bis 0,60, ganz besonders bevorzugt 0,45 bis 0,55 Massenanteile modifizierter oder unmodifizierter Polyvinylalkohole,
   b) 0,05 bis 0,10, vorzugsweise 0,01 bis 0,07, ganz besonders bevorzugt 0,02 bis 0,05 Massenanteile Alkylen/(Meth)Acrylsäure-Copolymer
   c) 0,005 bis 0,07, vorzugsweise 0,01 bis 0,05, ganz besonders bevorzugt 0,01 bis 0,03 Massenanteile Vernetzer
      und/oder
   d) 0,20 bis 0,50, vorzugsweise 0,25 bis 0,45, ganz besonders bevorzugt 0,30 bis 0,40 Massenanteile eines, zweier oder der mehr als zwei Pigmente enthält.
14. Beschichtungszusammensetzung nach Ausführungsform 1, wobei die Beschichtungszusammensetzung zwei Pigmente umfasst, bei denen es sich um Kaolin und gefällte Kieselsäure handelt, wobei die Beschichtungszusammensetzung einen modifizierten Polyvinylalkohol enthält, und wobei das Alkylen/(Meth)Acrylsäure-Copolymer ein Ethylen/Acrylsäure-Copolymer ist.
15. Schichtverbund umfassend eine Trägerschicht und eine Veredelungsschicht, wobei die Veredelungsschicht aus einer Beschichtungszusammensetzung nach einer der vorherigen Ausführungsformen hergestellt wurde.
16. Schichtverbund nach Ausführungsform 15, wobei der Schichtverbund eine zwischen der Trägerschicht und der Beschichtungszusammensetzung angeordnete wärmeempfindliche Aufzeichnungsschicht umfasst, wobei die wärmeempfindliche Aufzeichnungsschicht einen Farbstoffvorläufer und einen Farbentwickler umfasst und der Farbentwickler bei Wärmeeinwirkung eine Farbbildung im Farbstoffvorläufer induzieren kann, wobei die die wärmeempfindliche Aufzeichnungsschicht vorzugsweise ein Bindemittel enthält, vorzugsweise ein vernetztes oder unvernetztes Bindemittel enthält, ausgewählt aus der Gruppe bestehend aus Polyvinylalkohol, acetoacetyl-modifiziertem Polyvinylalkohol, carboxylgruppen-modifiziertem Polyvinylalkohol, Ethylen-Vinylalkohol-Copolymer, einer Kombination aus Polyvinylalkohol und Ethylen-Vinylalkohol-Copolymer, silanolgruppen-modifiziertem Polyvinylalkohol, diaceton-modifiziertem Polyvinylalkohol, Acrylat-Copolymer und filmbildenden Acrylcopolymeren.
17. Schichtverbund nach Ausführungsform 15, wobei der Schichtverbund eine zwischen der Trägerschicht und der Beschichtungszusammensetzung angeordnete Barriereschicht umfasst.
18. Schichtverbund nach Ausführungsform 17, wobei die Barrierschicht vorzugsweise ein Bindemittel enthält, vorzugsweise ein vernetztes oder unvernetztes Bindemittel enthält, ausgewählt aus der Gruppe bestehend aus Polyvinylalkohol, acetoacetyl-modifiziertem Polyvinylalkohol, carboxylgruppen-modifiziertem Polyvinylalkohol, Ethylen-Vinylalkohol-Copolymer, einer Kombination aus Polyvinylalkohol und Ethylen-Vinylalkohol-Copolymer, silanolgruppen-modifiziertem Polyvinylalkohol, diaceton-modifiziertem Polyvinylalkohol, Acrylat-Copolymer und filmbildenden Acrylcopolymeren.
19. Verwendung einer Mischung aus Ethylen/Acrylsäure-Copolymer und acetoacetyl-modifiziertem Polyvinylalkohol in einer Schicht eines Schichtverbundes.
20. Verwendung einer Beschichtungszusammensetzung nach einer der Ausführungsformen 1 bis 14 zur Herstellung eines Schichtverbundes, insbesondere zur Herstellung eines wärmeempfindlichen Aufzeichnungsmaterials.
21. Verwendung einer Beschichtungszusammensetzung nach einer der Ausführungsformen 1 bis 14, zur Herstellung eines Schichtverbundes, insbesondere zur Herstellung einer Lebensmittelverpackung.
22. Verfahren zur Herstellung eines Schichtverbundes, mindestens umfassend folgende Verfahrensschritte:
   i) Bereitstellen oder Herstellen einer zweiten Beschichtungszusammensetzung umfassend
      a) einen modifizierten oder unmodifizierten Polyvinylalkohol,
      b) ein Alkylen/(Meth)Acrylsäure-Copolymer
      c) einen Vernetzer und
      d) ein, zwei oder mehr als zwei Pigmente;
   ii) Aufbringen der bereitgestellten oder hergestellten Beschichtungszusammensetzung aus Verfahrensschritt i) auf ein Substrat;
   iii) Trocknen der in Verfahrensschritt ii) aufgebrachten Beschichtungszusammensetzung unter Ausbildung einer Veredelungsschicht.

## Patentansprüche

1. Beschichtungszusammensetzung zur Herstellung eines Schichtverbundes umfassend
a) einen modifizierten oder unmodifizierten Polyvinylalkohol,
b) ein Alkylen/(Meth)Acrylsäure-Copolymer
c) einen Vernetzer und
d) ein, zwei oder mehr als zwei Pigmente.

2. Beschichtungszusammensetzung nach Anspruch 1, wobei zumindest ein Pigment, zwei Pigmente oder sämtliche Pigmente ausgewählt sind aus der Gruppe bestehend aus Aluminiumsilikat, Aluminiumoxid, Aluminiumhydroxid, Bariumsulfat, Bentonit, Böhmit, natürlichem Calciumcarbonat, gefälltem Calciumcarbonat, Diatomeenerde, Harnstoff-Formaldehyd-Harz, natürlichem Kaolin, kalziniertem Kaolin, Kaolinit oder calciniertem Kaolinit, Kieselgur, Kieselsäure, vorzugsweise gefällter Kieselsäure, Magnesiumsilikat, Magnesiumcarbonat, Satinweiß, Siliziumoxid, Talkum, Titanoxid, Tonerde, aktivierter Tonerde und Zinkoxid.

3. Beschichtungszusammensetzung nach einem der vorherigen Ansprüche, wobei die Beschichtungszusammensetzung
- zwei oder mehr als zwei Pigmente umfasst
und/oder
- als Pigment Kieselsäure, vorzugsweise gefällte Kieselsäure, enthält.

4. Beschichtungszusammensetzung nach einem der vorherigen Ansprüche, wobei die Beschichtungszusammensetzung zwei Pigmente umfasst, bei denen es sich um Kaolin und Kieselsäure handelt, wobei es sich bei der Kieselsäure vorzugsweise um gefällte Kieselsäure handelt.

5. Beschichtungszusammensetzung nach einem der vorherigen Ansprüche, wobei das Alkylen/(Meth)Acrylsäure-Copolymer ein Ethylen/(Meth)Acrylsäure-Copolymer, Propylen/(Meth)Acrylsäure-Copolymer, ein Butylen/(Meth)Acrylsäure-Copolymer oder ein iso-Butylen/(Meth)Acrylsäure-Copolymer ist,
vorzugsweise ein Ethylen/(Meth)Acrylsäure-Copolymer ist und besonders bevorzugt ein Ethylen/Acrylsäure-Copolymer ist.

6. Beschichtungszusammensetzung nach einem der vorherigen Ansprüche, wobei die Beschichtungszusammensetzung einen modifizierten Polyvinylalkohol enthält,
vorzugsweise einen acetoacetyl-modifizierten Polyvinylalkohol, carboxylgruppen-modifizierten Polyvinylalkohol, silanolgruppen-modifizierten Polyvinylalkohol oderdiaceton-modifizierten Polyvinylalkohol enthält,
und ganz besonders bevorzugt einen acetoacetyl-modifizierten Polyvinylalkohol enthält.

7. Beschichtungszusammensetzung nach einem der vorherigen Ansprüche, wobei der Vernetzer zumindest eine funktionelle Gruppe aufweist, ausgewählt aus der Gruppe bestehend aus einer Aldehydgruppe, Amingruppe, Carboxylgruppe, Carboxylatgruppe und Hydrazidgruppe.

8. Beschichtungszusammensetzung nach einem der vorherigen Ansprüche, wobei die Beschichtungszusammensetzung
a) 0,30 bis 0,70, vorzugsweise 0,40 bis 0,60, ganz besonders bevorzugt 0,45 bis 0,55 Massenanteile modifizierter oder unmodifizierter Polyvinylalkohole,
b) 0,05 bis 0,10, vorzugsweise 0,01 bis 0,07, ganz besonders bevorzugt 0,02 bis 0,05 Massenanteile Alkylen/(Meth)Acrylsäure-Copolymer
c) 0,005 bis 0,07, vorzugsweise 0,01 bis 0,05, ganz besonders bevorzugt 0,01 bis 0,03 Massenanteile Vernetzer
und/oder
d) 0,20 bis 0,50, vorzugsweise 0,25 bis 0,45, ganz besonders bevorzugt 0,30 bis 0,40 Massenanteile eines, zweier oder der mehr als zwei Pigmente enthält.

9. Beschichtungszusammensetzung nach Anspruch 1, wobei die Beschichtungszusammensetzung zwei Pigmente umfasst, bei denen es sich um Kaolin und gefällte Kieselsäure handelt, wobei die Beschichtungszusammensetzung einen modifizierten Polyvinylalkohol enthält, und wobei das Alkylen/(Meth)Acrylsäure-Copolymer ein Ethylen/Acrylsäure-Copolymer ist.

10. Schichtverbund umfassend eine Trägerschicht und eine Veredelungsschicht, wobei die Veredelungsschicht aus einer Beschichtungszusammensetzung nach einem der vorherigen Ansprüche hergestellt wurde.

11. Schichtverbund nach Anspruch 10, wobei der Schichtverbund eine zwischen der Trägerschicht und der Beschichtungszusammensetzung angeordnete wärmeempfindliche Aufzeichnungsschicht umfasst, wobei die wärmeempfindliche Aufzeichnungsschicht einen Farbstoffvorläufer und einen Farbentwickler umfasst und der Farbentwickler bei Wärmeeinwirkung eine Farbbildung im Farbstoffvorläufer induzieren kann, wobei die die wärmeempfindliche Aufzeichnungsschicht vorzugsweise ein Bindemittel enthält, vorzugsweise ein vernetztes oder unvernetztes Bindemittel enthält, ausgewählt aus der Gruppe bestehend aus Polyvinylalkohol, acetoacetyl-modifiziertem Polyvinylalkohol, carboxylgruppen-modifiziertem Polyvinylalkohol, Ethylen-Vinylalkohol-Copolymer, einer Kombination aus Polyvinylalkohol und Ethylen-Vinylalkohol-Copolymer, silanolgruppen-modifiziertem Polyvinylalkohol, diaceton-modifiziertem Polyvinylalkohol, Acrylat-Copolymer und filmbildenden Acrylcopolymeren.

12. Schichtverbund nach Patentanspruch 10, wobei der Schichtverbund eine zwischen der Trägerschicht und der Beschichtungszusammensetzung angeordnete Barriereschicht umfasst,
wobei vorzugsweise die Barrierschicht ein Bindemittel enthält, vorzugsweise ein vernetztes oder unvernetztes Bindemittel enthält, ausgewählt aus der Gruppe bestehend aus Polyvinylalkohol, acetoacetyl-modifiziertem Polyvinylalkohol, carboxylgruppen-modifiziertem Polyvinylalkohol, Ethylen-Vinylalkohol-Copolymer, einer Kombination aus Polyvinylalkohol und Ethylen-Vinylalkohol-Copolymer, silanolgruppen-modifiziertem Polyvinylalkohol, diaceton-modifiziertem Polyvinylalkohol, Acrylat-Copolymer und filmbildenden Acrylcopolymeren.

13. Verwendung einer Mischung aus Ethylen/Acrylsäure-Copolymer und acetoacetyl-modifiziertem Polyvinylalkohol in einer Schicht eines Schichtverbundes.

14. Verwendung einer Beschichtungszusammensetzung nach einem der Ansprüche 1 bis 9 zur Herstellung eines Schichtverbundes,
insbesondere
- zur Herstellung eines wärmeempfindlichen Aufzeichnungsmaterials und/oder
- zur Herstellung einer Lebensmittelverpackung.

15. Verfahren zur Herstellung eines Schichtverbundes, mindestens umfassend folgende Verfahrensschritte:
i) Bereitstellen oder Herstellen einer zweiten Beschichtungszusammensetzung umfassend
a) einen modifizierten oder unmodifizierten Polyvinylalkohol,
b) ein Alkylen/(Meth)Acrylsäure-Copolymer
c) einen Vernetzer und
d) ein, zwei oder mehr als zwei Pigmente;
ii) Aufbringen der bereitgestellten oder hergestellten Beschichtungszusammensetzung aus Verfahrensschritt i) auf ein Substrat;
iii) Trocknen der in Verfahrensschritt ii) aufgebrachten Beschichtungszusammensetzung unter Ausbildung einer Veredelungsschicht.
